# EUROPEAN PATENT SPECIFICATION

(11) **EP 2 868 512 B1**
(45) Date of publication and mention of the grant of the patent: **17.08.2016**
(21) Application number: 14190016.7
(22) Date of filing: 23.10.2014
(51) Int. Cl.: B62J 99/00, B60K 35/00, B60K 37/02

(54) **Saddle type vehicle**
Sattelfahrzeug
Véhicule de type à selle

(30) Priority: 31.10.2013 JP 2013227011
(43) Date of publication of application: 06.05.2015
(73) Proprietor: Yamaha Hatsudoki Kabushiki Kaisha, Iwata-shi, Shizuoka 438-8501 (JP)
(72) Inventor: Yagi, Toshiki, Iwata-shi, Shizuoka 438-8501 (JP); Watanabe, Takashi, Iwata-shi, Shizuoka 438-8501 (JP)
(74) Representative: Grünecker Patent- und Rechtsanwälte PartG mbB

(56) References cited:
- EP-A1- 2 479 057
- EP-A2- 2 360 399
- JP-A- 2009 220 819

## Description

The present invention relates to a saddle type vehicle according to the preamble of independent claim 1. Such a saddle type vehicle can be taken from the prior art document EP 2 479 057 A1.

Conventionally, on a saddle type vehicle such as a motorcycle, a device for giving a rider a warning necessitated by a vehicle state is mounted in the vicinity of its handlebar unit.

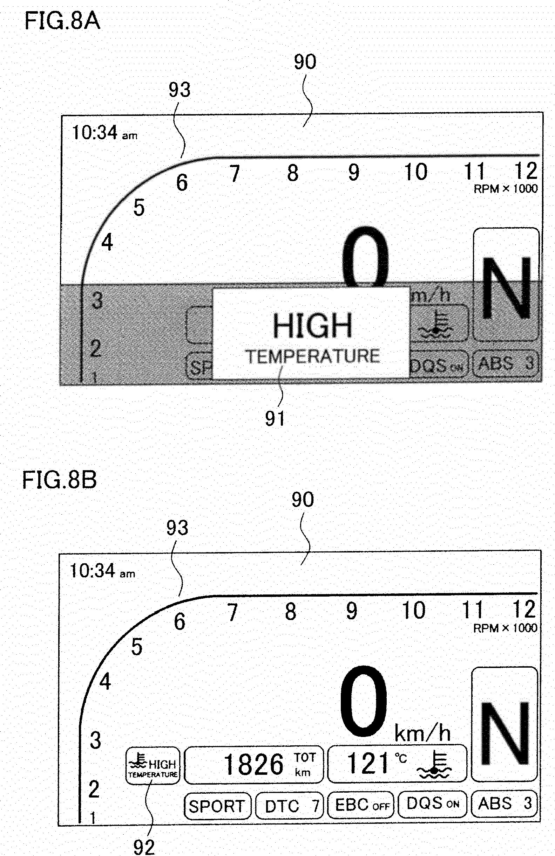

As for a motorcycle of Non-Patent Literature 1 ("Owner's Manual (Japanese Language) SUPERBIKE 1199PANIGALE S 1199PANIGALE S ABS", Ducati Motor Holding spa, February 2012, cod 913.7.190.1B), for example, a warning is displayed on a display device configured to display images. In this Non-Patent Literature 1, a warning is displayed if the temperature of the engine coolant is too high, for example. Specifically, if the temperature of the engine coolant exceeds a predetermined temperature, a warning 91 in a larger font ("HIGH TEMPERATURE") is displayed on a screen 90 only for first several seconds, as shown in FIG. 8A. The warning 91 is displayed over the images generally displayed on the screen 90. After the several seconds have passed, a warning 92 in a smaller font ("HIGH TEMPERATURE") is displayed in a predetermined position on the screen 90, as shown in FIG. 8B.

On such a saddle type vehicle, a display device is disposed in the vicinity of its handlebar unit, so there is a limit on the size of a screen of the display device. Therefore, in Non-Patent Literature 1, the larger-font warning is displayed on the screen to increase the possibility that a rider notices the warning.

However, the rider does not continuously look at the screen while driving, and the rider checks the screen at timings depending on the driving situation. Further, the period of time during which the rider continuously looks at the screen while driving is very short. Therefore, even though the indication of the warning is large, the warning would be missed if the timing at which the rider looks at the screen does not fall within the period of time (of several seconds) during which the warning is displayed.

In view of the above, an object of the present invention is to provide a saddle type vehicle which causes a rider to be more likely to notice a warning irrespective of a timing at which the rider checks a screen while driving, even if the indication of the warning is small.

According to the present invention said object is solved by a saddle type vehicle having the features of independent claim 1. Preferred embodiments are laid down in the dependent claims.

A saddle type vehicle according to a preferred embodiment is described in independent claim 1.

In this structure, the saddle type vehicle includes: the seat located higher than the crankcase of the engine mounted on the vehicle body frame; the handlebar unit located forward of the seat and higher than the crankcase of the engine; and the display device located forward of the seat and higher than the crankcase of the engine, the display device including the screen having the front end portion and the rear end portion located lower than the front end portion. In this saddle type vehicle, the level of the seat from the ground is similar to that of the screen of the display device. Therefore, when a rider seated on the seat checks the screen of the display device, the rider looks down the screen from above. Thus, when the rider turns his/her eyes from a road etc. ahead to the screen of the display device, his/her line of sight is moved in a forward/rearward direction of the vehicle ("vehicle forward/rearward direction"). Generally, the rider of the saddle type vehicle drives paying attention to the rotation speed of the engine. Therefore, it is relatively more frequent for the rider to look at the engine rotation speed indicator on the screen, which indicates the rotation speed of the engine. According to the present teaching, the warning icon indicating the warning is displayed between the front end portion of the screen and the engine rotation speed indicator. Therefore, when the rider turns his/her eyes from the road etc. ahead to the engine rotation speed indicator, his/her line of sight is moved in the vehicle forward/rearward direction and passes through the warning icon. This enables the rider to see the warning icon when looking at the engine rotation speed indicator which is looked at relatively frequently among indications on the screen. Therefore, even if the warning icon is small, the rider is more likely to notice the warning, irrespective of the timing at which the rider checks the screen while driving.

Note that, according to the present teaching, the front end portion and the rear end portion of the screen respectively refer to the front end portion and the rear end portion of the screen with respect to the vehicle forward/rearward direction.

Further, according to the present teaching, the state in which the warning icon is displayed between the front end portion of the screen and the engine rotation speed indicator refers to the state where at least a part of the warning icon is displayed in an area between two lines, one connecting the both ends of the front end portion of the screen in a width direction of the vehicle ("vehicle width direction"), the other connecting both ends of the engine rotation speed indicator in the vehicle width direction. Note that an icon is a symbol representation using a simple picture.

Further, according to the present teaching, a warning includes not only a notice of a possible danger, but also a notice of a problem in or a change from a normal state.

In the saddle type vehicle of the present teaching, it is preferable that the at least one warning icon includes multiple types of warning icons, and the display device is configured to display the multiple types of warning icons in an arrangement such that the warning icons are adjacent to each other.

In this structure, the display device is configured to display the multiple types of warning icons in an arrangement such that the warning icons are adjacent to each other. Therefore, no other indication is displayed between two adjacent warning icons, and the warning icons are displayed closer to each other. Consequently, the rider is further more likely to notice the plurality of warning icons on the way to turning his/her eyes from the road etc. ahead to the engine rotation speed indicator.

Note that, according to the present teaching, the state in which the multiple types of warning icons are displayed in an arrangement such that the warning icons are adjacent to each other is the state in which there is no other indication between the warning icons. The "other indication" herein is an indication having a meaning, such as an icon flashing on and off, and does not include a mere line and the like. In the state where the multiple types of warning icons are displayed in an arrangement such that the warning icons are adjacent to each other, the distance between two adjacent warning icons is not particularly limited.

Further, the state in which the multiple types of warning icons are displayed in an arrangement such that the warning icons are adjacent to each other includes the state in which all of the warning icons are aligned in a single line, but also the state in which the warning icons are arranged in a plurality of directions.

In the saddle type vehicle of the present teaching, it is preferable that the display device is configured to display the multiple types of warning icons in an arrangement in at least the vehicle width direction.

In this structure, the multiple types of warning icons are displayed in an arrangement in at least the vehicle width direction. This increases the possibility that the line of sight of the rider passes through any of the multiple types of warning icons when the rider turns his/her eyes from the road etc. ahead to the engine rotation speed indicator. The rider who has noticed any of the plurality of warning icons on the way to moving his/her line of sight in the forward/rearward direction is more likely to stop moving the line of sight at that icon, and then to move his/her line of sight in the vehicle width direction. This increases the possibility of noticing the other warning icon(s) displayed in alignment in the vehicle width direction with the first noticed warning icon. Thus, the rider is further more likely to notice the plurality of warning icons.

Note that, according to the present teaching, the state in which the multiple types of warning icons are displayed in an arrangement in the vehicle width direction includes not only the state in which an arrangement direction of the warning icons (the direction in which the warning icons are arranged) is completely parallel to the vehicle width direction, but also the state where the arrangement direction is slightly diverted from the vehicle width direction (the state in which the arrangement direction is almost parallel to the vehicle width direction).

Further, according to the present teaching, the state in which the multiple types of warning icons are arranged in at least the vehicle width direction includes the state in which four warning icons, for example, are arranged in two by two in the vehicle width direction and in the direction orthogonal to the vehicle width direction. Further, the above state includes, for example, the plurality of the warning icons are arranged along an arc, and two or more of the warning icons are arranged in the vehicle width direction.

In the saddle type vehicle of the present teaching, it is preferable that the engine rotation speed indicator includes an indicating portion indicating a current rotation speed of the engine, the indicating portion configured to move at least in the direction in which the multiple types of warning icons are arranged.

When the rider looks at the engine rotation speed indicator, his/her line of sight tends to move in a movement direction of the indicating portion indicating the current rotation speed of the engine. According to the present teaching, the indicating portion of the engine rotation speed indicator is configured to move at least in the arrangement direction of the multiple types of warning icons. This increases the possibility that the plurality of warning icons come into the sight of the rider when the rider looks at the engine rotation speed indicator. Therefore, in both cases where the multiple types of warning icons are displayed in an arrangement and where one of them is displayed in sole, the rider is more likely to notice the warning icon(s) at the time of looking at the engine rotation speed indicator.

Note that, according to the present teaching, the expression "the indicating portion moves in the arrangement direction of the multiple types of warning icons" includes not only the case in which the movement direction of the indicating portion is completely parallel to the arrangement direction of the warning icons, but also the case in which the movement direction is slightly diverted from the arrangement direction (the state in which the movement direction is almost parallel to the arrangement direction).

Further, according to the present teaching, the expression "the indicating portion moves at least in the arrangement direction of the multiple types of warning icons" includes a case, for example, the indicating portion moves along a curved line, and a part of the curved line is parallel to or substantially parallel to the arrangement direction of the warning icons.

In the saddle type vehicle of the present teaching, it is preferable that the display device is configured to display at least one of the multiple types of warning icons so as to be adjacent to the engine rotation speed indicator.

When the rider turns his/her eyes from the road etc. ahead to the engine rotation speed indicator, his/her line of the sight is moved fast. Therefore, the closer the warning icon(s) is (are) to the engine rotation speed indicator, the more likely the rider is to notice the warning icon(s). According to the present teaching, at least one of the multiple types of warning icons is displayed adjacent to the engine rotation speed indicator. Therefore, no other indication is displayed between the at least one warning icon and the engine rotation speed indicator. This allows the warning icon to be displayed closer to the engine rotation speed indicator. Thus, the rider is more likely to notice the warning icon displayed adjacent to the engine rotation speed indicator at the time of turning his/her eyes from the road etc. ahead to the engine rotation speed indicator.

Note that, according to the present teaching, the state in which a warning icon is displayed adjacent to the engine rotation speed indicator is the state in which there is no other indication between the warning icon and the engine rotation speed indicator. The "other indication" herein is an indication having a meaning, such as an icon flashing on and off, and does not include a mere line and the like. In the state where the warning icon is displayed adjacent to the engine rotation speed indicator, the distance between that adjacent warning icon and the engine rotation speed indicator is not particularly limited.

In the saddle type vehicle of the present teaching, it is preferable that the display device is configured to display at least one of the multiple types of warning icons and an information icon indicating information other than warning, between the front end portion of the screen and the engine rotation speed indicator indicating the rotation speed of the engine so that the at least one of the warning icons is adjacent to the information icon.

In this structure, the information icon indicating information other than warning is displayed between the front end portion of the screen and the engine rotation speed indicator. This enables the rider to check the information icon on the way to turning his/her eyes from the road etc. ahead to the engine rotation speed indicator.

Further, according to the present teaching, at least one of the multiple types of warning icons and the information icon are displayed between the front end portion of the screen and the engine rotation speed indicator so that the at least one of the warning icons is adjacent to the information icon. This increases the possibility that the rider notices the warning icon displayed adjacent to the information icon at the time of checking the information icon.

In the saddle type vehicle of the present teaching, it is preferable that the display device is configured to display at least one of the multiple types of warning icons between the front end portion of the screen and the engine rotation speed indicator indicating the rotation speed of the engine and in a display area of an information icon indicating information other than warning, without displaying the information icon in its display area.

In this structure, the display area of the information icon indicating information other than warning is located between the front end portion of the screen and the engine rotation speed indicator. This enables the rider to check the information icon on the way to turning his/her eyes from the road etc. ahead to the engine rotation speed indicator.

Further, according to the present teaching, at least one of the multiple types of warning icons is displayed, between the front end portion of the screen and the engine rotation speed indicator, in the display area of the information icon, without displaying the information icon in its display area. This enables the rider to notice the warning icon when the rider is going to check the information icon on the way to turning his/her eyes from the road etc. ahead to the engine rotation speed indicator.

In the saddle type vehicle of the present teaching, it is preferable that the display device is configured to display the at least one warning icon forward of grips of the handlebar unit with respect to the vehicle forward/rearward direction.

In this structure, the at least one warning icon is displayed forward of the grips of the handlebar unit with respect to the vehicle forward/rearward direction. With this, it is more likely that the at least one warning icon comes into the sight of the rider seeing the road etc. ahead, compared with the case where the warning icon is displayed rearward of the front end portions of the grips of the handlebar unit with respect to the vehicle forward/rearward direction. Therefore, the rider is more likely to notice the warning, not only when the rider turns his/her eyes from the road etc. ahead to the engine rotation speed indicator, but also when the rider sees the road etc. ahead.

Note that, according to the present teaching, the state in which the at least one warning icon is displayed forward of the grips of the handlebar unit with respect to the vehicle forward/rearward direction is the state in which the warning icon is displayed forward of the front end portions of the grips with respect to the vehicle forward/rearward direction.

In the saddle type vehicle of the present teaching, it is preferable that the display device is configured to display the at least one warning icon between front end portions of the grips of the handlebar unit and the seat with respect to the vehicle forward/rearward direction.

In this structure, the display device is disposed so that the at least one warning icon is positioned between the front end portions of the grips of the handlebar unit and the seat with respect to the vehicle forward/rearward direction. This enables the saddle type vehicle to have a shorter length in the vehicle forward/rearward direction, than in the case where the display device is disposed so that the at least one warning icon is displayed forward of the front end portions of the grips of the handlebar unit with respect to the vehicle forward/rearward direction. Further, the display device is located at a position closer to the center of gravity of the vehicle.

In the saddle type vehicle of the present teaching, it is preferable that the display device is configured to indicate a change in vehicle speed by changing a number displayed on the screen, and each of the at least one warning icon is smaller than one digit of the number indicating the vehicle speed.

In this structure, each of the at least one warning icon is smaller than one digit of the number indicating the vehicle speed. Therefore, even when there are a large number of types of warnings to be displayed, it is possible to display the warning icons in areas different from one type to another.

### BRIEF DESCRIPTION OF THE DRAWINGS

FIG. 1 is a side view of a motorcycle of a preferred embodiment.
FIG. 2 is a view viewed from a direction of an arrow A of FIG. 1, showing a screen of a display device on which no warning is displayed.
FIG. 3 is a view viewed from the direction of the arrow A of FIG. 1, showing the screen of the display device on which all the warnings are displayed.
FIG. 4 is a view viewed from the direction of the arrow A of FIG. 1, showing the screen of the display device on which an oil pressure warning is displayed.
FIG. 5 is a view of a motorcycle of another preferred embodiment, the view corresponding to FIG. 3.
FIG. 6 is a side view of a motorcycle of another preferred embodiment.
FIG. 7 is a side view of a motorcycle according of still another preferred embodiment.
FIG. 8A shows an exemplary warning displayed on a display of Non-Patent Literature 1.
FIG. 8B is shows a screen displayed several seconds after the screen of FIG. 8A is displayed.

### DESCRIPTION OF THE PREFERRED EMBODIMENTS

The following describes an embodiment of a saddle type vehicle of the present teaching, with reference to a motorcycle 1 as an example. Note that, in the following description, a forward/rearward direction refers to the forward/rearward direction of the vehicle as seen from a rider R seated on a seat 11, which will be described later, of the motorcycle 1, and a right/left direction refers to the right/left direction of the vehicle as seen from the rider R seated on the seat 11 (also referred to as a "vehicle width direction").

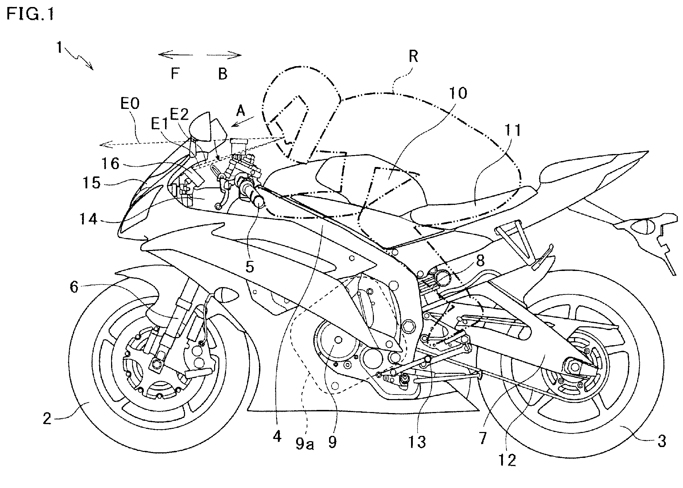

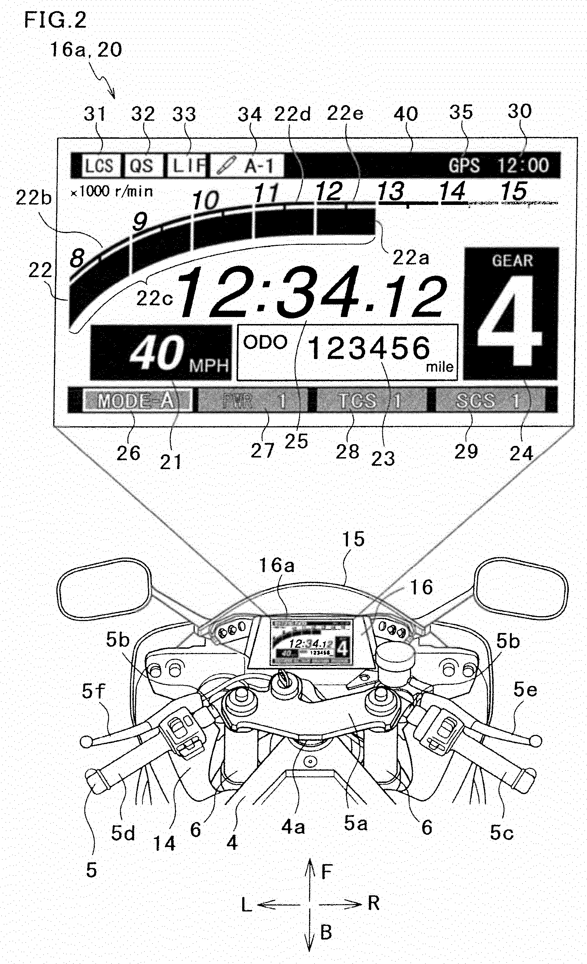

As shown in FIG. 1, the motorcycle 1 includes a front wheel 2, a rear wheel 3, and a vehicle body frame 4. Note that, an arrow F and an arrow B shown in FIG. 1, and FIGs. 2 to 4, 6, and 7 (will be referred to later) respectively indicate a forward direction and a rearward direction. Further, an arrow L and an arrow R shown in FIGs. 2 to 4 (will be referred to later) respectively indicate a left direction and a right direction.

As shown in FIG. 2, a head pipe 4a is provided at a front portion of the vehicle body frame 4. In the head pipe 4a, a steering shaft (not shown) is rotatably inserted. A handle crown 5a is secured to an upper end of the steering shaft.

The handle crown 5a has right and left end portions, to which upper end portions of front forks 6 are respectively secured. Lower end portions of the front forks 6 support the front wheel 2. Each of the front forks 6 has a suspension (not shown) which absorbs shock in the up/down direction.

Further, to the upper end portions of the two front forks 6, handlebars 5b are secured respectively. The left handlebar 5b extends rearward left from the left end portion of the handle crown 5a. Meanwhile, the right handlebar 5b extends rearward right from the right end portion of the handle crown 5a.

On the outer peripheries of the two handlebars 5b, grips 5c and 5d are mounted, respectively. The right grip 5c is a throttle grip. Further, a brake lever 5e is attached to the right handlebar 5b, and a clutch lever 5f is attached to the left handlebar 5b. Furthermore, various switches are provided to the handle crown 5a and the handlebars 5b. The handlebars 5b and the grips 5c and 5d constitute a handlebar unit 5.

A swingarm 7 is swingably held, at its front end portion, by a rear portion of the vehicle body frame 4. Rear end portions of the swingarm 7 hold the rear wheel 3. Each of rear suspensions 8 which absorb shock in the up/down direction connects a portion of the swingarm 7 which is not a swingarm pivot to the vehicle body frame 4.

Further, on the vehicle body frame 4, a water-cooled engine 9 is mounted. The engine 9 may be mounted directly on the vehicle body frame 4, or may be mounted indirectly via another member. The engine 9 includes a crankcase 9a. The crankcase 9a is located lower than the handlebar unit 5. Note that the engine 9 may be an air-cooled engine.

Further, rearward of the engine 9, there is disposed a transmission (not shown) having a plurality of speed-changing gears. The driving power of the engine 9 is transmitted to the rear wheel 3 via the transmission and a chain 12. To the left of the transmission, there is provided a shift pedal 13 for changing the gears of the transmission.

Rearward of the handlebar unit 5, a fuel tank 10 and a seat 11 are attached to an upper portion of the vehicle body frame 4. The seat 11 is located rearward of the fuel tank 10. The fuel tank 10 and the seat 11 are located higher than the crankcase 9a of the engine 9.

A headlight unit 14 is located higher than the front wheel 2 and forward of the handlebar unit 5 (forward of the seat 11). A front face of the headlight unit 14 is covered with a front cowling 15. At the top of the headlight unit 14, a display device 16 is disposed. The display device 16 is located higher than the crankcase 9a of the engine 9. The display device 16 is positioned between the right and left grips 5c and 5d with respect to the right/left direction. The display device 16 is located at a central portion of the motorcycle 1 with respect to the vehicle width direction.

The display device 16 has a quadrangular screen 16a. The display device 16 is tilted with respect to the forward/rearward direction and the up/down direction so that the screen 16a faces rearward up. Therefore, a rear end portion of the screen 16a is positioned lower than a front end portion of the screen 16a. Note that, the front end portion and the rear end portion of the screen 16a are a front edge and a rear edge of the screen 16a, respectively.

In this embodiment, the screen 16a is formed at a central portion of the display device 16 in the right/left direction. Note that the center of the screen 16a in the vehicle width direction may be shifted from the center of the motorcycle 1 in the vehicle width direction. Further, in this embodiment, the front end portion and the rear end portion of the screen 16a are respectively close to a front end portion and a rear end portion of the display device 16. Note that the distance between the front end portions of the screen 16a and the display device 16, and the distance between the rear end portions of the screen 16a and the display device 16 may be larger than those in this embodiment, respectively.

In this embodiment, the rear end portion of the screen 16a is almost level with the grips 5c and 5d of the handlebar unit 5, but is positioned slightly higher than the grips 5c and 5d. Note that the rear end portion of the screen 16a may be relatively more higher than the grips 5c and 5d than in this embodiment. Alternatively, the rear end portion of the screen 16a may be positioned lower than the grips 5c and 5d. Further, it is preferable that the front end portion of the screen 16a is positioned higher than the grips 5c and 5d; however, the front end portion may be positioned lower than the grips 5c and 5d.

The screen 16a of the display device 16 is a dot-matrix display capable of displaying color images. The display is, for example, a liquid crystal display, a plasma display, an organic electroluminescent display, or the like. Note that, in addition to the screen 16a, the display device 16 may include another display unit different from the screen 16a.

The motorcycle 1 includes a not-shown controller configured to control operation of each part of the motorcycle 1. The controller is constituted by a CPU, a ROM, a RAM, and the like. The controller includes an engine control unit, a suspension control unit, and a display control unit.

The engine control unit of the controller is coupled to an engine system including the engine 9, the fuel tank 10, an injector (not shown), an oil pressure sensor (not shown), a coolant temperature sensor (not shown), and the like. The engine control unit is configured to control the drive of the engine 9.

The suspension control unit of the controller is coupled to a suspension system including the front forks 6, the rear suspensions 8, a stepping motor (not shown), and the like. The suspension control unit is configured to control the damping force created in the front forks 6 and in the rear suspensions 8.

The display control unit of the controller is coupled to the display device 16. The display control unit is configured to control display on the screen 16a in response to an operation on a switch or according to the vehicle state. Further, the controller determines whether a warning to the rider is needed for a detected condition of the vehicle. The controller makes the above determination for multiple types of warnings. When the controller determines that a warning is needed for a detected condition, the display control unit controls the display device to display, on the screen 16a, a warning icon (will be described later) indicating the warning for that condition. Note that, instead of the display control unit included in the controller, a control unit may be provided in the display device. Further, the control unit of the display device may include some of the functions of the display control unit of this embodiment.

The motorcycle 1 further includes a radio communication device (not shown) coupled to the controller. Furthermore, the motorcycle 1 includes a battery (not shown) which supplies electric power to the controller, the display device 16, and electronic equipment such as various sensors.

The display device 16 displays, on the screen 16a, information on the vehicle state, for example. Powered through an operation on a switch, the display device 16 automatically displays, on the screen 16a, a basic screen in a track mode or in a street mode. FIG. 2 shows an example of a basic screen 20 in the track mode. Switching between the basic screen 20 in the track mode and the basic screen in the street mode is made through an operation on a switch. Details of the information displayed on the basic screen will be described later.

Further, on the screen 16a, it is possible to make a switch from the basic screen to a setting screen (not shown) by operating a switch while the vehicle is stopped. On the setting screen, it is possible to select a riding mode from a plurality of riding modes by operating a switch. Furthermore, on the setting screen, it is possible to change a plurality of settings related to operations of the vehicle in each riding mode. In this embodiment, the plurality of settings related to the operations of the vehicle are the following seven settings: PWR setting, TCS setting, SCS setting, LCS setting, QS setting, LIF setting, and SUS setting. Note that the items of the settings related to the operations of the vehicle, which are changeable on the setting screen, are not limited to those listed above.

The PWR setting is a setting for changing the position of the throttle relative to an amount of operation on the throttle grip 5c. The TCS setting is a setting for turning on/off and changing the level of a traction control system for preventing wheel spin of the rear wheel 3 at the time of starting or acceleration. The SCS setting is a setting for turning on/off and changing the level of a skid control system for suppressing skid of the wheels 2 and 3. The LCS setting is a setting for turning on/off and changing the level of a launch control system for smooth and rapid start of the stopped vehicle. The QS setting is a setting for turning on/off and changing the level of a quick shift system for enabling a shift change without an operation on the clutch lever 5f. The LIF setting is a setting for turning on/off and changing the level of a lift control system for suppressing a lift of the moving front wheel 2. The SUS setting is a setting for changing the damping forces created in the front forks 6 and in the rear suspensions 8.

Hereinafter, the basic screen 20 in the track mode will be described.

On the basic screen 20 in the track mode, there are always displayed a vehicle speed indicator 21, an engine rotation speed indicator 22, a traveled distance indicator 23, a gear position indicator 24, a riding mode indicator 26, a PWR indicator 27, a TCS indicator 28, an SCS indicator 29, a clock time icon 30, and an SUS icon 34. The riding mode indicator 26, the PWR indicator 27, the TCS indicator 28, the SCS indicator 29, and the SUS icon 34 respectively indicate the current riding mode, the current PWR setting, the current TCS setting, the current SCS setting, and the current SUS setting.

Further, a lap time indicator 25 is displayed on the basic screen 20 while a lap time is measured (the measurement is started by operating a switch). An LCS icon 31 is displayed on the basic screen 20 while the LCS setting is on. A QS icon 32 is displayed on the basic screen 20 while the QS setting is on. An LIF icon 33 is displayed on the basic screen 20 while the LIF setting is on. The LCS icon 31, the QS icon 32, and the LIF icon 33 are not displayed while their respective settings are off. Furthermore, a GPS icon 35 is displayed on the basic screen 20 while the radio communication device (not shown) is able to receive GPS signals.

The engine rotation speed indicator 22 includes: an indicating portion 22a which indicates the current rotation speed of the engine; and a scale mark bar 22b. The scale mark bar 22b extends substantially in the right/left direction. The indicating portion 22a is displayed rearward of the scale mark bar 22b. The indicating portion 22a of this embodiment is formed by a right end portion of a level bar 22c having a length varying depending on the current rotation speed of the engine. The indicating portion 22a moves rightward as the rotation speed of the engine increases. The indicating portion 22a may be configured to make a step movement in increments of one scale mark or in increments of a half thereof in the right/left direction, or may be configured to continuously move in the right/left direction. Further, another configuration is also possible.

The scale mark bar 22b of this embodiment has scale marks of which the smallest value is 8. This is because it is assumed that the motorcycle is driven at a relatively high engine rotation speed when the basic screen 20 in the track mode is used. Note that the smallest value of the scale marks of the scale mark bar 22b may be a value other than 8.

The scale mark bar 22b has an oblique portion 22d extending forward right from a position in the vicinity of the left end of the screen 16a, and a linear portion 22e extending rightward from the right end of the oblique portion 22d to a position in the vicinity of the right end of the screen 16a. The left end of the oblique portion 22d is positioned substantially at the center of the screen 16a in the forward/rearward direction. In this embodiment, the length of the oblique portion 22d in the right/left direction is substantially the same as the length of the linear portion 22e in the right/left direction. Note that the length of the oblique portion 22d in the right/left direction may be longer or shorter than the length of the linear portion 22e in the right/left direction.

The riding mode indicator 26, the PWR indicator 27, the TCS indicator 28, and the SCS indicator 29 are displayed in the vicinity of the rear end portion of the basic screen 20, in an arrangement in the right/left direction such that they are adjacent to each other.

The vehicle speed indicator 21, the traveled distance indicator 23, the gear position indicator 24, and the lap time indicator 25 are displayed rearward of the engine rotation speed indicator 22 and forward of the riding mode indicator 26, the PWR indicator 27, the TCS indicator 28, and the SCS indicator 29. The vehicle speed indicator 21 of this embodiment indicates a change in vehicle speed by changing a number displayed.

The LCS icon 31, the QS icon 32, the LIF icon 33, the SUS icon 34, the GPS icon 35, and the clock time icon 30 are displayed between a front end portion of the basic screen 20 and the engine rotation speed indicator 22. In the following description, the LCS icon 31, the QS icon 32, the LIF icon 33, and the SUS icon 34 may be referred to as setting icons.

In the vicinity of the front end portion of the basic screen 20, there is displayed a bar 40 extending in the right/left direction from a position near a left end portion of the basic screen 20 to a position near a right end portion of the basic screen 20. The setting icons 31 to 34, the GPS icon 35, and the clock time icon 30 are displayed in the area of the bar 40. While the settings respectively corresponding to the setting icons 31 to 33 are off, display areas of the setting icons 31 to 33 are filled with the color of the bar 40. Note that, in this Specification, the "display area" of an icon means the area in which the icon is supposed to be displayed, regardless of whether the icon is currently displayed or not.

The setting icons 31 to 34 are displayed leftward of the center of the bar 40 in the right/left direction. The display areas of the setting icons 31 to 34 are arranged in this order from the left to the right. The display areas of the setting icons 31 to 34 are at the same position as the oblique portion 22d of the engine rotation speed indicator 22, with respect to the right/left direction. The display area of the setting icon 31 is in the vicinity of the left end portion of the basic screen 20. The display area of the setting icon 34 is substantially at the same position as the right end portion of the oblique portion 22d of the engine rotation speed indicator 22, with respect to the right/left direction.

The GPS icon 35 and the clock time icon 30 are displayed rightward of the center of the bar 40 in the right/left direction. The clock time icon 30 is displayed in the vicinity of the right end portion of the basic screen 20. The GPS icon 35 is displayed at the left of the clock time icon 30. The display area of the setting icon 34 is distant from the display area of the GPS icon 35 in the right/left direction.

The setting icons 31 to 34, the GPS icon 35, the clock time icon 30, and the bar 40 are displayed in a color other than reddish colors (including orange).

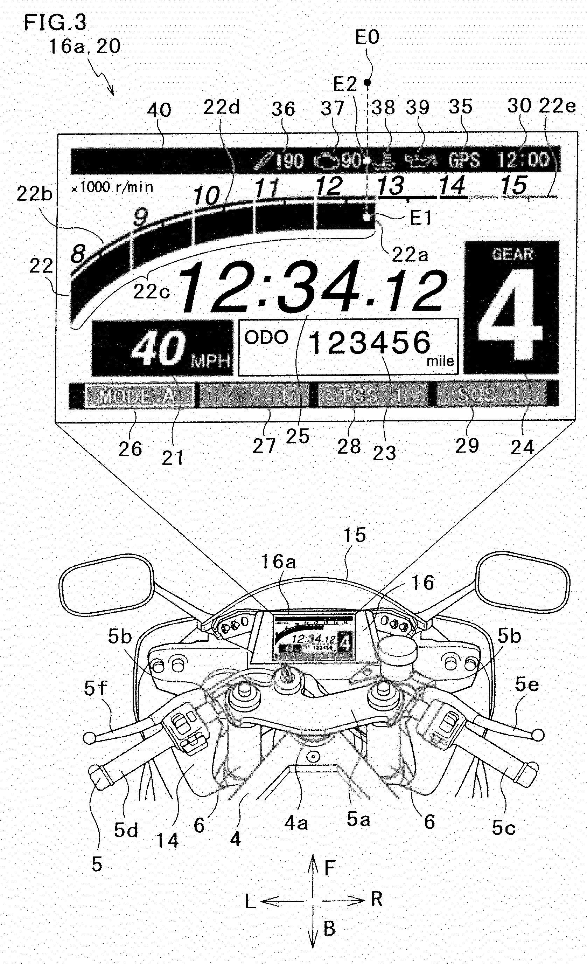

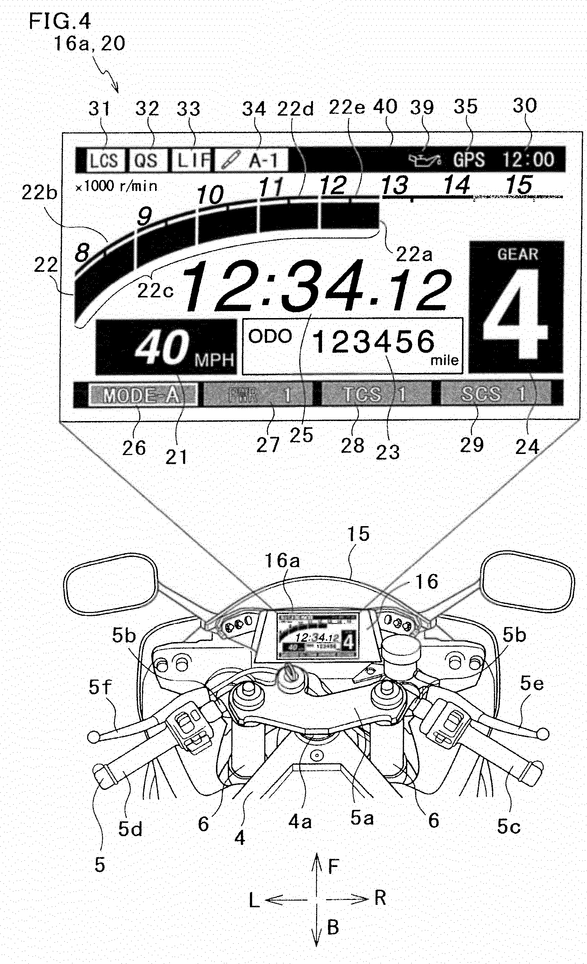

Further, when the controller determines that a warning to the rider R is needed for a detected condition, the warning icon indicating the warning for that condition is displayed on the basic screen 20, for example shown in FIGs. 3 and 4. The warning icons of this embodiment are of four types, which are a suspension warning icon 36, an engine warning icon 37, a coolant temperature warning icon 38, and an oil pressure warning icon 39. The warning icons 36 to 39 are displayed between the front end portion of the basic screen 20 and the engine rotation speed indicator 22. The warning icons 36 to 39 are displayed adjacent to the engine rotation speed indicator 22. Further, the warning icons 36 to 39 are displayed adjacent to the front end portion of the basic screen 20.

The suspension warning icon 36 is displayed if a device constituting the suspension system or the suspension control unit fails, or disconnection or short-circuit occurs in the wiring connecting the suspension control unit to each device. The suspension warning icon 36 is constituted by a picture symbol representing a suspension, an exclamation mark, and a failure code indicating its failure mode. The failure code may be displayed only when the engine is stopped. The picture symbol and the exclamation mark constituting the suspension warning icon 36 are displayed in red or orange. The failure code may be displayed in red or orange, or may be displayed in another color (such as white).

While the suspension warning icon 36 is displayed, the setting icons 31 to 34 are not displayed. The suspension warning icon 36 is displayed in the display area of the setting icon 34 which is to be displayed at the rightmost position among the setting icons 31 to 34. The setting icon 34 corresponds to an "information icon indicating information other than warning" of the present teaching. The display area of the suspension warning icon 36 partially overlaps the display area of the setting icon 34. Note that one of the display areas of the suspension warning icon 36 and the setting icon 34 may overlap the whole of the other display area.

The engine warning icon 37 is displayed if a device constituting the engine system or the engine control unit fails, or disconnection or short-circuit occurs in wiring connecting the engine control unit to each device. The engine warning icon 37 is constituted by a picture symbol representing an engine, and a failure code indicating the failure mode. The failure code may be displayed only when the engine is stopped. The picture symbol constituting the engine warning icon 37 is displayed in red or orange. The failure code may be displayed in red or orange, or may be displayed in another color (such as white).

While the engine warning icon 37 is displayed, the setting icons 31 to 34 are not displayed. The engine warning icon 37 is displayed rightward of the display area of the suspension warning icon 36.

The coolant temperature warning icon 38 is displayed if the temperature of the engine coolant detected by the coolant temperature sensor (not shown) exceeds a predetermined value. The coolant temperature warning icon 38 is displayed in red or orange.

While the coolant temperature warning icon 38 is displayed, the setting icons 31 to 34 are not displayed. The coolant temperature warning icon 38 is displayed rightward of the display area of the engine warning icon 37.

The oil pressure warning icon 39 is displayed if the pressure of engine oil detected by the oil pressure sensor (not shown) drops below a predetermined value. The oil pressure warning icon 39 is displayed in red or orange. The oil pressure warning icon 39 is displayed rightward of the display area of the coolant temperature warning icon 38 and leftward of the display area of the GPS icon 35.

When it is determined that the oil pressure warning is needed but the remaining three warnings are not needed, the oil pressure warning icon 39 is displayed with zero or more of the setting icons 31 to 33 (these are displayed while their respective settings (the LCS setting, the QS setting, and the LIF setting) are on), and with the setting icon 34 (see FIG. 4). Therefore, in this case, the oil pressure warning icon 39 is displayed adjacent to the setting icon 34. The setting icon 34 corresponds to the "information icon indicating information other than warning" of the present teaching.

The size of each of the warning icons 36 to 39 is smaller than one digit of a number indicated by the vehicle speed indicator 21. Note that, in this Specification, "the size of an icon is smaller than one digit of a number indicated by the vehicle speed indicator 21" means that the area of the smallest rectangle enclosing the icon is smaller than the largest area among the areas of the smallest rectangles respectively enclosing the digits 0 to 9 which can constitute the number indicated by the vehicle speed indicator 21.

When it is determined that the four warnings are needed, the four warning icons 36 to 39 are displayed in an arrangement in the right/left direction so that they are adjacent to each other, as shown in FIG. 3. The direction in which the four warning icons 36 to 39 are arranged (an "arrangement direction of the warning icons") is the same as the direction in which the indicating portion 22a of the engine rotation speed indicator 22 moves (a "movement direction of the indicating portion").

Further, the display area of the suspension warning icon 36 which is displayed at the leftmost position among the warning icons 36 to 39 is at the same position as the right end portion of the oblique portion 22d of the engine rotation speed indicator 22, with respect to the right/left direction. The display areas of the remaining three warning icons 37 to 39 are at the same position as the linear portion 22e of the engine rotation speed indicator 22, with respect to the right/left direction. Furthermore, the display area of the suspension warning icon 36 overlaps a right portion of the display area of the setting icon 34. Moreover, as described above, the display areas of the setting icons 31 to 34 are at the same position as the oblique portion 22d of the engine rotation speed indicator 22, with respect to the right/left direction. Therefore, the warning icons 36 to 39 are displayed closer to the engine rotation speed indicator 22 than the display areas of the setting icons 31 to 34, with respect to the forward/rearward direction.

Further, when at least one of the warning icons 36 to 39 is displayed, the rightmost warning icon of the displayed warning icons is displayed adjacent to the GPS icon 35 (displayed when GPS signals are receivable) or the clock time icon 30 in the right/left direction. The GPS icon 35 and the clock time icon 30 each corresponds to the "information icon indicating information other than warning" of the present teaching.

Note that, when the warning icon 36 is not displayed, the display area of the warning icon 36 is partially filled with the color of the bar 40 and a part of the setting icon 34 is displayed therein. When the warning icons 37 to 39 are not displayed, the display areas of the warning icons 37 to 39 are filled with the color of the bar 40.

Now, the basic screen in the street mode will be described.

The setting icons 31 to 34, the warning icons 36 to 39, the GPS icon 35, the clock time icon 30, the riding mode indicator 26, the PWR indicator 27, the TCS indicator 28, and the SCS indicator 29 are common between the basic screens in the street mode and the track mode.

On the basic screen in the street mode, an engine rotation speed indicator is displayed at the same position as the engine rotation speed indicator 22 on the basic screen 20 in the track mode. However, the engine rotation speed indicator in the street mode has scale marks whose smallest value is smaller than that of the engine rotation speed indicator 22 in the track mode. Further, the lap time is not displayed on the basic screen in the street mode. On the basic screen in the street mode, the vehicle speed, the traveled distance, and the gear position are displayed rearward of the engine rotation speed indicator in a manner the same as or different from that on the basic screen in the track mode. The vehicle speed indicator in the street mode indicates a change in vehicle speed by changing a number displayed, similarly to the vehicle speed indicator 21 in the track mode. As is in the track mode, the size of one digit of a number indicated by the vehicle speed indicator in the street mode is larger than the size of each of the warning icons 36 to 39.

The motorcycle 1 of this embodiment includes: the seat 11 located higher than the crankcase 9a of the engine 9 mounted on the vehicle body frame 4; the handlebar unit 5 located forward of the seat 11 and higher than the crankcase 9a, and the display device 16 located forward of the seat 11 and higher than the crankcase 9a, the display device 16 including the screen 16a having the front end portion and the rear end portion positioned lower than the front end portion. In this motorcycle 1, the level of the seat 11 from the ground is similar to that of the screen 16a of the display device 16. Therefore, when the rider R seated on the seat 11 checks the screen 16a, the rider R looks down the screen 16a from above. Thus, when the rider R turns his/her eyes from a road etc. ahead to the screen 16a, his/her line of sight is moved in the vehicle forward/rearward direction. Generally, the rider R of the motorcycle 1 drives paying attention to the rotation speed of the engine 9. Therefore, it is relatively more frequent for the rider R to look at the engine rotation speed indicator 22 on the screen 16a, which indicates the rotation speed of the engine. In this embodiment, each of the warning icons 36 to 39 indicating their respective warnings is displayed between the front end portion of the screen 16a and the engine rotation speed indicator 22. Thus, when the rider R turns his/her eyes from the road ahead (from the state indicated with a sight line E0 in FIGs. 1 and 3) to the engine rotation speed indicator 22 (to the state indicated with a sight line E1 in FIGs. 1 and 3), his/her line of sight is moved in the vehicle forward/rearward direction, passing through one or more displayed icons of the warning icons 36 to 39 (the state indicated with a sight line E2 in FIGs. 1 and 3). This enables the rider R to see the one or more displayed icons of the warning icons 36 to 39 when looking at the engine rotation speed indicator 22 which is looked at relatively frequently among the indications on the screen 16a. Therefore, though the warning icons 36 to 39 are small, the rider R is more likely to notice the warnings, irrespective of the timing at which the rider R checks the screen 16a while driving.

Further, the display device 16 of this embodiment is configured to display multiple types of warning icons (36 to 39) in an arrangement such that the warning icons are adjacent to each other. Therefore, no other indication is displayed between two adjacent warning icons, and the warning icons are displayed closer to each other. Consequently, the rider R is further more likely to notice the warning icons (36 to 39) on the way to turning his/her eyes from the road etc. ahead to the engine rotation speed indicator 22.

Further, in this embodiment, the multiple types of warning icons (36 to 39) are displayed in an arrangement in the vehicle width direction. This increases the possibility that the line of sight of the rider R passes through any of the multiple types of warning icons (36 to 39) when the rider R turns his/her eyes from the road etc. ahead to the engine rotation speed indicator 22. The rider R who has noticed any of the plurality of warning icons (36 to 39) on the way to moving his/her line of sight in the forward/rearward direction is more likely to stop moving the line of sight at that icon, and then to move his/her line of sight in the vehicle width direction. This increases the possibility of noticing the other warning icon(s) displayed in alignment in the vehicle width direction with the first noticed warning icon. Thus, the rider R is further more likely to notice the plurality of warning icons (36 to 39).

When the rider looks at the engine rotation speed indicator 22, his/her line of sight tends to move in the movement direction of the indicating portion 22a indicating the current rotation speed of the engine. In this embodiment, the indicating portion 22a of the engine rotation speed indicator 22 is configured to move in the arrangement direction of the multiple types of warning icons (36 to 39). This increases the possibility that the plurality of warning icons (36 to 39) come into the sight of the rider when the rider looks at the engine rotation speed indicator 22. Therefore, in both cases where the multiple types of warning icons (36 to 39) are displayed in an arrangement and where one of them is displayed in sole, the rider is more likely to notice the warning icon(s) at the time of looking at the engine rotation speed indicator 22.

Further, when the rider R turns his/her eyes from the road etc. ahead to the engine rotation speed indicator 22, his/her line of the sight is moved fast. Therefore, the closer the warning icon(s) is to the engine rotation speed indicator 22, the more likely the rider R is to notice the warning icon(s).

Assuming that: the movement direction of the indicating portion of the engine rotation speed indicator is the vehicle width direction; and the multiple types of warning icons are displayed in an arrangement in the forward/rearward direction (the direction orthogonal to the vehicle width direction) only, the distance between the frontmost warning icon out of the plurality of warning icons and the engine rotation speed indicator is larger. Therefore, if the frontmost warning icon of the warning icons is displayed without displaying the other warning icons, the rider R is less likely to notice the warning icon even though the line of sight of the rider R passes through the warning icon on the way to turning his/her eyes from the road etc. ahead to the engine rotation speed indicator 22.

However, in this embodiment, the multiple types of warning icons (36 to 39) are displayed in an arrangement in the vehicle width direction which is the movement direction of the indicating portion 22a, and therefore every distance between each of the multiple types of warning icons (36 to 39) and the engine rotation speed indicator 22 is small. With this, the rider R is more likely to notice one or more of the warning icons 36 to 39 in both cases where: one of the warning icons 36 to 39 is displayed in sole; and two or more of the warning icons 36 to 39 are displayed in an arrangement.

Further, in this embodiment, the multiple types of warning icons (36 to 39) are displayed adjacent to the engine rotation speed indicator 22. Thus, no other indication is displayed between the warning icons and the engine rotation speed indicator 22. This allows the warning icons (36 to 39) to be displayed closer to the engine rotation speed indicator 22. Therefore, the rider R is further more likely to notice the warning icons (36 to 39) at the time of turning his/her eyes from the road etc. ahead to the engine rotation speed indicator 22.

Furthermore, in this embodiment, the setting icons 31 to 34, the GPS icon 35, and the clock time icon 30 are displayed between the front end portion of the screen 16a and the engine rotation speed indicator 22. This allows the rider R to check the setting icons 31 to 34, GPS icon 35, and the clock time icon 30 on the way to turning his/her eyes from the road etc. ahead to the engine rotation speed indicator 22.

Moreover, in this embodiment, when at least one of the warning icons 36 to 39 is displayed, the rightmost warning icon of the displayed warning icon(s) is displayed adjacent to the GPS icon 35 or the clock time icon 30 and between the front end portion of the screen 16a and the engine rotation speed indicator 22. This increases the possibility that the rider notices the warning icon(s) at the time of checking the GPS icon 35 or the clock time icon 30.

Furthermore, in this embodiment, when the warning icons 36 to 38 are not displayed, the warning icon 39 and the setting icon 34 are displayed adjacent to each other between the front end portion of the screen 16a and the engine rotation speed indicator 22. This increases the possibility that the rider notices the warning icon 39 at the time of checking the setting icon 34.

Furthermore, in this embodiment, when the warning icons 36 to 38 are not displayed, the oil pressure warning icon 39 is displayed with the setting icons 31 to 34 displayed. This makes it possible to check the setting icons 31 to 34 and the warning icon 39 simultaneously.

Further, in this embodiment, the warning icon 36 is displayed between the front end portion of the screen 16a and the engine rotation speed indicator 22, in the display area of the setting icon 34, without displaying the setting icon 34 in its display area. This enables the rider R to notice the warning icon 36 when the rider R is going to check the setting icon 34 on the way to turning his/her eyes from the road etc. ahead to the engine rotation speed indicator 22.

Furthermore, since the warning icon 36 is displayed in the area overlapping the display area of the setting icon 34, it is possible to display a larger number of warning icons in a limited section on the screen 16a, than in the case where every warning icon is displayed in an area which does not overlap the display areas of the setting icons (information icons).

Further, in this embodiment, the setting icons 31 to 33 are displayed between the front end portion of the screen 16a and the engine rotation speed indicator 22, in their respective areas different from the display areas of the warning icons 36 to 39. The setting icon 34 is displayed between the front end portion of the screen 16a and the engine rotation speed indicator 22, in the area different from the display areas of the warning icons 37 to 39. Furthermore, when at least one of the warning icons 36 to 38 is displayed, the setting icons 31 to 34 are not displayed. Thus, when at least one of the warning icons 36 to 38 is displayed, the rider R notices the warning(s), not only by finding the at least one icon of the warning icons 36 to 38, but also by finding that the setting icons 31 to 34 disappear, when the rider R turns his/her eyes from the road etc. ahead to the engine rotation speed indicator 22.

As described above, in this embodiment, the display areas of the warning icons 36 to 39 are closer to the engine rotation speed indicator 22 than the display areas of the setting icons 31 to 34 with respect to the forward/rearward direction. Thus, the display areas of the warning icons 36 to 39 in this embodiment are closer to the engine rotation speed indicator 22 with respect to the forward/rearward direction, compared with the case where the display areas of the warning icons 36 to 39 and the display areas of the setting icons 31 to 34 are switched. This increases the possibility that the rider R notices one or more displayed icons of the warning icons 36 to 39 when the rider R turns his/her eyes from the road etc. ahead to the engine rotation speed indicator 22.

Further, the warning icons 36 to 39 are displayed forward of the grips 5c and 5d of the handlebar unit 5 with respect to the forward/rearward direction. With this, it is more likely that one or more displayed icons of the warning icons 36 to 39 come into the sight of the rider R seeing the road etc. ahead, compared with the case where the warning icons 36 to 39 are displayed rearward of the front end portions of the grips 5c and 5d of the handlebar unit 5 with respect to the forward/rearward direction. Therefore, the rider R is more likely to notice the warnings, not only when the rider R turns his/her eyes from the road etc. ahead to the engine rotation speed indicator 22, but also when the rider R sees the road etc. ahead.

Further, in this embodiment, the size of each of the warning icons 36 to 39 is smaller than one digit of the number indicated by the vehicle speed indicator 21. Therefore, it is possible to display the warning icons 36 to 39 in areas different from one type to another though there are a large number of types of warnings.

Furthermore, in this embodiment, each warning is displayed using an icon. Assuming that the warning indication uses a word having a meaning and that the number of characters of the word of the warning indication is large, it may be impossible to understand what the warning tells just by glancing at the warning indication. In this embodiment, however, an icon is used as a warning indication, and this makes it is possible to understand what the warning indication tells just by glancing at the warning indication even during the movement of the line of sight. In addition, it is easier to understand what the warning indication tells even though the warning indication is small.

While driving, the rider tends to look at the screen of the display device, except the time when the rider looks at the road etc. ahead. Therefore, conventionally, a warning is displayed on the screen as is in Non-Patent Literature 1, to increase the possibility that the rider notices the warning.

Since the display device of the motorcycle is disposed in the vicinity of the handlebar unit, there is a limit on the size of the screen of the display device. Meanwhile, there is no particular limit on the location of the warning displayed on the screen of the display device. The present inventors use their ingenuities in where of the limited size screen the warning is displayed, to increase the possibility that the warning is noticed irrespective of the timing of at which the screen is looked at.

In Non-Patent Literature 1, when a condition for which a warning is needed is detected, the warning 91 in a larger font is displayed just for first several seconds, and then the warning 92 in a smaller font is displayed. Since the warning 91 in the larger font is displayed during the limited period of time, it may be missed. In this embodiment, however, the warning icons 36 to 39 are always displayed while the warnings are needed, which increases the possibility that the warning icons 36 to 39 are noticed, irrespective of the timing at which the screen 16a is looked at.

Further, in Non-Patent Literature 1, the warning 92 in the smaller font is displayed rearward of an indicator 93 indicating the rotation speed of the engine (see FIG. 8B). Therefore, when a rider turns his/her eyes from the road etc. ahead to the engine rotation speed indicator 93, his/her line of sight does not pass through the warning 92. Accordingly, if the rider overlooks the warning 91 in the larger font and misses the warning, the chances that the rider notices the warning 92 in the smaller font are slim.

In this embodiment, however, the warning icons are displayed between the front end portion of the screen 16a and the engine rotation speed indicator 22, and this enables the rider to notice the warning icons when the rider turns his/her eyes from the road etc. ahead to the engine rotation speed indicator 22 on the screen 16a.

Further, in Non-Patent Literature 1, when a warning for the coolant temperature and a warning for the outside air temperature, for example, are needed simultaneously, a warning indication for the coolant temperature and a warning indication for the outside air temperature are alternately displayed in the same area, each for several seconds. Therefore, the rider has to read the characters in the warning indication to understand the meaning of the warning.

In this embodiment, however, when a plurality of warnings are needed simultaneously, the warning icons are displayed in their respective areas different from one type to another. This increases the possibility that the rider notices all the warnings irrespective of the timing at which the rider checks the screen 16a. Further, the location at which each warning icon is displayed helps understand what is warned. Therefore it is easier to understand what is warned even though each warning icon is small.

A preferred preferred embodiment has been described above. However, the present teaching is not limited to the above-described embodiment, and various changes can be made within the scope of the claims. Further, variations which will be described later may be used in combination as needed. Note that the term "preferable" in this Specification is non-exclusive, and means "preferable, but not limited to".

The types of the warning icons to be displayed between the front end portion of the screen 16a and the engine rotation speed indicator 22 on the screen 16a are not limited to the four types as described above. For example, the warning icons to be displayed may be of one or more of the four types. Further, in addition to the above-described four types, the types of the warning icons to be displayed may include one or more other types, for example. Alternatively, the warning icons to be displayed may be of one or more types other than the above-described four types, for example.

Information displayed with the warning icon(s) on the screen 16a of the display device 16 is not limited to the information described in the above embodiment. Any other information may be displayed as long as at least the engine rotation speed indicator indicating the rotation speed of the engine is displayed on the same screen as the warning icon(s).

In the above embodiment, the vehicle speed indicator 21 is configured to indicate a change in vehicle speed by changing a number displayed; however, the manner how the vehicle speed is indicated is not limited to this. For example, the vehicle speed indicator may be an indicator having an indicating portion which indicates the current vehicle speed by moving as the vehicle speed changes. The indicating portion may be formed by an end portion of a level bar having a length varying depending on the current vehicle speed, as is the indicating portion 22a of the engine rotation speed indicator 22. Alternatively, the indicating portion may be formed by a needle.

In the above embodiment, the indicating portion 22a of the engine rotation speed indicator 22 is configured to move forward right and then move rightward as the rotation speed of the engine increases. However, the direction in which the indicating portion of the present teaching moves is not limited to this. For example, the indicating portion may be configured to move rightward and then move rearward right as the rotation speed of the engine increases. Further, for example, the indicating portion may be configured to rotationally move about an arbitrary point. To be more specific, the indicating portion may be configured to move forward right and then move rearward right, for example.

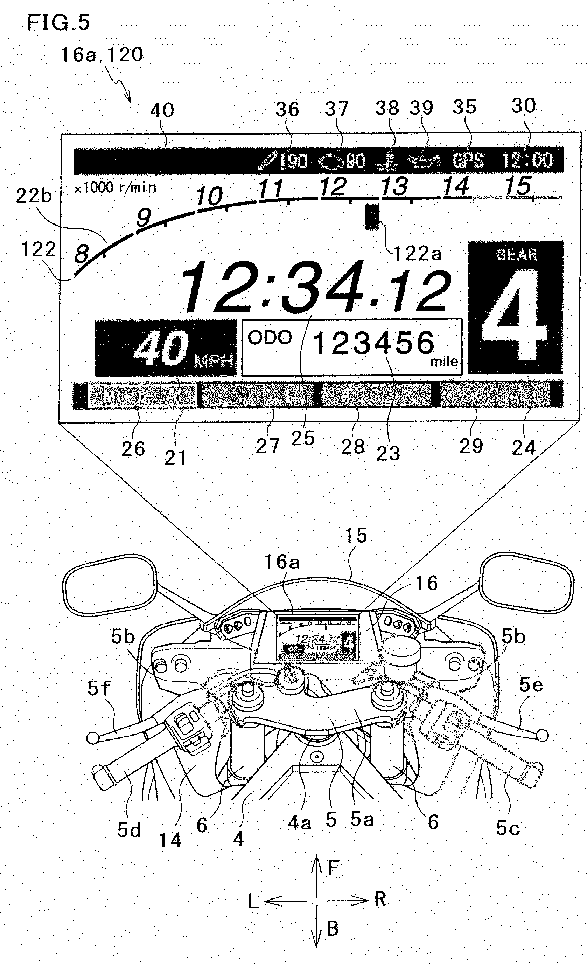

In the above embodiment, the indicating portion 22a of the engine rotation speed indicator 22 is formed by the right end of the level bar 22c having the length varying depending on the rotation speed of the engine; however, the structure of the indicating portion of the present teaching is not limited to this. For example, the indicating portion may be formed by a needle as an indicating portion 122a of an engine rotation speed indicator 122 shown in the FIG. 5. The shape of the needle is not particularly limited. For the indicating portion (needle) configured to rotationally move about an arbitrary point, the indicating portion (needle) may extend from the center of rotation.

In the above embodiment, the indicating portion 22a of the engine rotation speed indicator 22 is configured to move in an area between the position in the vicinity of the right end portion of the screen 16a and the position in the vicinity of the left end portion of the screen 16a. However, the length in the right/left direction of the area in which the indicating portion 22a moves (that is, the length in the right/left direction of the area on which the engine rotation speed indicator 22 is displayed) may be smaller than that in the above embodiment. In this case, the warning icon(s) shall be displayed in an area between two lines, one connecting the right ends of the front end portion of the screen 16a and the engine rotation speed indicator 22, the other connecting the left ends of the front end portion of the screen 16a and the engine rotation speed indicator 22.

In the above embodiment, the engine rotation speed indicator 22 is an indicator having an indicating portion which moves as the rotation speed of the engine changes; however, the manner of indication of the engine rotation speed indicator is not limited to this. The engine rotation speed indicator may be an indicator which indicates a change in the rotation speed of the engine by the change of numeric characters.

In the above embodiment, the display area of the warning icon 36 which is displayed at the leftmost position (position closest to the setting icons) among the plurality of warning icons 36 to 39 is substantially at the same position, with respect to the right/left direction, as the right end portion of the oblique portion 22d of the engine rotation speed indicator 22. However, the display area may be shifted to the right or left from the right end portion of the oblique portion 22d.

In the above embodiment, the warning icons 36 to 39 are displayed in an arrangement such that the warning icons are adjacent to each other. Therefore, no indication other than the warning icons is displayed between two warning icons; however, an indication other than the warning icons may be displayed between two warning icons.

In the above embodiment, the warning icons 36 to 39 are displayed in alignment along a line in the vehicle width direction; however, the warning icons may be arranged in another manner. For example, the four warning icons may be displayed in such a manner that two icons are arranged in the vehicle width direction and two icons are arranged in a direction orthogonal to the vehicle width direction. Further, for example, the warning icons may be displayed in an arrangement in the direction along a line at approximately 45 degrees to the vehicle width direction. Further, for example, the warning icons may be displayed in an arrangement only in the direction along a line orthogonal to the vehicle width direction. Furthermore, for example, the warning icons may be displayed in an arrangement along a shape other than a straight line (e.g., along a curved line), two or more of which warning icons are arranged in the vehicle width direction.

In the above embodiment, the warning icons 36 to 39 are displayed in alignment in the movement direction of the indicating portion 22a; however, the warning icons may be arranged in another manner. For example, the four warning icons may be displayed in such a manner that two icons are arranged in the movement direction of the indicating portion 22a and two icons are arranged in a direction orthogonal to the movement direction. Further, for example, the warning icons may be displayed in an arrangement in a direction along a line at approximately 45 degrees to the movement direction of the indicating portion 22a. Further, for example, the warning icons may be displayed in an arrangement only in the direction orthogonal to the movement direction of the indicating portion 22a. Furthermore, for example, the warning icons may be displayed in an arrangement along a shape other than a straight line (e.g., along a curved line), two or more of which warning icons are arranged in the movement direction of the indicating portion 22a.

In the above embodiment, the setting icons 31 to 34 are displayed in alignment along a line in the vehicle width direction; however, the setting icons may be arranged in another manner. For example, the setting icons may be arranged in a direction orthogonal to the vehicle width direction. Further, for example, the setting icons may be displayed in an arrangement along a shape other than a straight line (e.g., along a curved line), two or more of which setting icons are arranged in the vehicle width direction. The arrangement direction of the setting icons may be the same as or different from the arrangement direction of the warning icons.

In the above embodiment, the warning icons 36 to 39 are displayed adjacent to the engine rotation speed indicator 22. Therefore, in the above embodiment, there is no indication between the warning icons 36 to 39 and the engine rotation speed indicator 22; however, an indication other than the warning icons may be displayed between the warning icons and the engine rotation speed indicator 22.

In the above embodiment, the warning icons 36 to 39 are displayed adjacent to the front end portion of the screen 16a. Therefore, there is no other indication between the warning icons 36 to 39 and the front end portion of the screen 16a; however, an indication other than the warning icons may be displayed between the warning icons and the front end portion of the screen 16a.

In the above embodiment, when the warning icons 36 to 38 are not displayed, the warning icon 39 and the setting icon 34 are displayed adjacent to each other in the vehicle width direction (the right/left direction). Further, when at least one of the warning icons 36 to 39 is displayed, the rightmost warning icon of the displayed warning icon(s) is displayed adjacent to the GPS icon 35 (displayed where GPS signals are receivable) or the clock time icon 30 in the vehicle width direction (the right/left direction).

Thus, in the above embodiment, an "information icon indicating information other than warning" and the warning icon are displayed adjacent to each other in the vehicle width direction (which is also the movement direction of the indicating portion 22a). However, the direction in which the "information icon indicating information other than warning" and the warning icon are arranged may be a direction other than the vehicle width direction, or a direction other than the movement direction of the indicating portion 22a.

Further, an "information icon indicating information other than warning" displayed adjacent to the warning icon may be an icon other than the setting icon 34, the GPS icon 35, and the clock time icon 30.

In the above embodiment, only the rightmost warning icon 39 (which is most distant from the display areas of the setting icons) among the warning icons 36 to 39 is displayed with the setting icons 31 to 34 displayed. However, the number and location of the warning icons displayed with the setting icons are not limited to this. For example, two or more of the warning icons may be displayed with the setting icons displayed. Further, none of the warning icons may be displayed with the setting icons displayed.

In the above embodiment, only the leftmost warning icon 36 (which is closest to the display areas of the setting icons) among the warning icons 36 to 39 is displayed in the display area of the setting icon. However, the type and number of the warning icons displayed in the display areas of the setting icons (information icons) are not limited to this. For example, two warning icons may be displayed in the display areas of two setting icons. Alternatively, all of the display areas of the warning icons may be different from the display areas of the setting icons.

Further, the "information icon indicating information other than warning" displayed in the display area of the warning icon may be of a type other than the setting icons indicating the settings related to the operations of the vehicle.

In the above embodiment, the warning icons 36 to 39 are displayed between the left end portion of the screen 16a and the GPS icon 35 while being right aligned. However, the location with respect to the vehicle width direction where the warning icons 36 to 39 are displayed is not limited to that in the above embodiment. In addition, the location with respect to the vehicle width direction where the information icons (such as the setting icons 31 to 34, and the GPS icon 35) displayed in an arrangement in the arrangement direction of the warning icons 36 to 39 are displayed is not limited to that in the above embodiment. For example, the following manner is possible: between (i) the GPS icon 35 displayed at the same position as in the above embodiment and (ii) the left end portion of the screen 16a, the warning icons 36 to 39 are displayed while being left aligned, and the setting icons 31 to 34 are displayed while being right aligned.

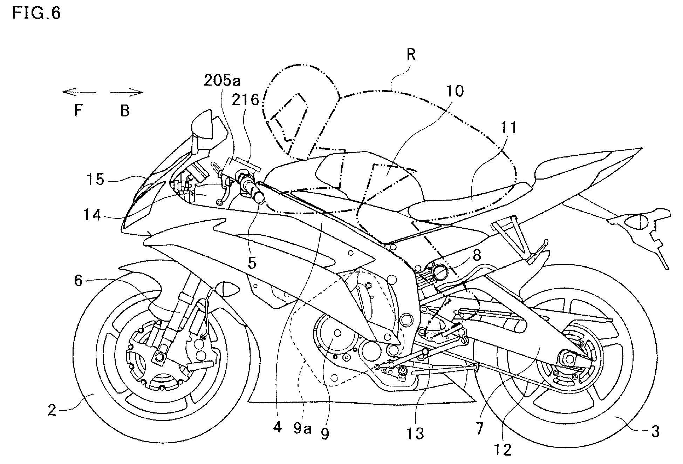

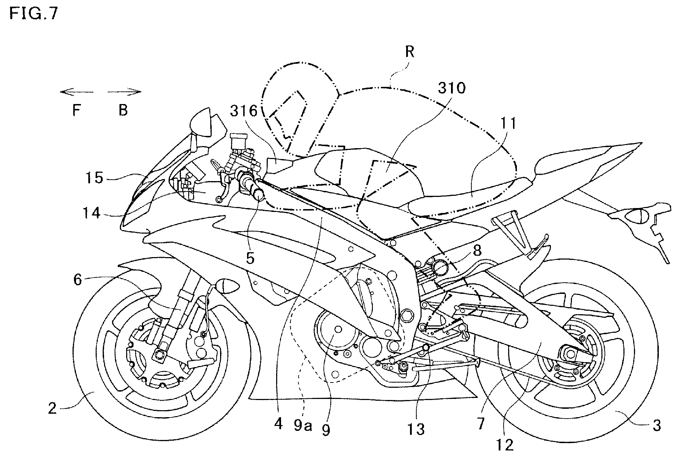

In the above embodiment, the display device 16 is provided at the top of the headlight unit 14; however, the position where the display device 16 is provided is not limited to this. As shown in FIG. 6, for example, a display device 216 may be provided at the top of a handle crown 205a of a handlebar unit 205. Further, the display device may be attached to a front portion or a rear portion of the handle crown, for example. Furthermore, as shown in FIG. 7, a display device 316 may be provided at the top of a fuel tank 310, for example.

In the above embodiment, the warning icons 36 to 39 are displayed forward of the grips 5c and 5d of the handlebar unit 5 with respect to the forward/rearward direction; however, the warning icons may be displayed between the front end portions of the grips of the handlebar unit and the seat 11 with respect to the forward/rearward direction. Examples of this variation include the structure where the display device 316 is disposed at the top of the fuel tank 310, as shown in FIG. 7, for example. This structure enables the motorcycle to have a shorter length in the vehicle forward/rearward direction, compared with the case where the display device is disposed so that the warning icons are displayed forward of the front end portions of the grips of the handlebar unit with respect to the forward/rearward direction. Further, the display device is located at a position closer to the center of gravity of the vehicle.

In the above embodiment, the front end portion of the screen 16a of the display device 16 is positioned forward of the grips 5c and 5d of the handlebar unit 5 with respect to the forward/rearward direction; however, the front end portion of the screen 16a may be positioned between the front end portions of the grips of the handlebar unit 5 and the seat 11 with respect to the forward/rearward direction. Examples of this variation include the structure where the display device 316 is disposed at the top of the fuel tank 310, as shown in FIG. 7, for example.

In the above embodiment and in the variations thereof, the handlebar unit 5, 205 has clip-on handlebars; however, the handlebar unit of the present teaching may have a one-piece handlebar. The clip-on handlebars are handlebars coupled to front forks without a handle crown interposed therebetween. The one-piece handlebar is a handlebar directly coupled to a handle crown.

The motorcycle 1 of the above embodiment is a street motorbike and a motorbike in a narrow sense; however, the saddle type vehicle of the present teaching is not limited to the motorbike in the narrow sense. It should be noted that the term "saddle type vehicle" refers to overall vehicles which a rider rides astride a saddle. The saddle type vehicle of the present teaching encompasses: two-wheeled motor vehicles (motorbikes in a broad sense), three-wheeled vehicles, four-wheelers (all terrain vehicles (ATV)), water scooters, and the like. Further, the motorbikes in the broad sense include scooters and the like, in addition to the motorbikes in the narrow sense.

## Claims

1. A saddle type vehicle (1) comprising:
a vehicle body frame (4);
an engine (9) mounted on the vehicle body frame (4) and including at least a crankcase (9a);
a seat (11) located higher than the crankcase (9a) of the engine (9);
a handlebar unit (5, 205) located forward of the seat (11) and higher than the crankcase (9a) of the engine (9); and
a display device (16, 216, 316) located forward of the seat (11) and higher than the crankcase (9a) of the engine (9), the display device (16, 216, 316) includes a screen (16a) configured to display a rotation speed of the engine (9) and having a front end portion and a rear end portion positioned lower than the front end portion, wherein
the display device (16, 216, 316) is configured to display at least one warning icon (36, 37, 38, 39) indicating a warning, **characterized in that**
the screen (16a) of the display device (16) is a dot-matrix display, and
the display device (16, 216, 316) is configured to display the warning icon (36, 37, 38, 39) on the screen (16a) between the front end portion of the screen (16a) and an engine rotation speed indicator (22, 122) indicating the rotation speed of the engine (9).

2. A saddle type vehicle (1) according to claim 1, **characterized in that** the at least one warning icon (36, 37, 38, 39) includes multiple types of warning icons (36, 37, 38, 39); and
the display device (16, 216, 316) is configured to display the multiple types of warning icons (36, 37, 38, 39) in an arrangement such that the warning icons (36, 37, 38, 39) are adjacent to each other.

3. A saddle type vehicle (1) according to claim 2, **characterized in that** the display device (16, 216, 316) is configured to display the multiple types of warning icons (36, 37, 38, 39) in an arrangement in at least a vehicle width direction.

4. A saddle type vehicle (1) according to claim 3, **characterized in that** the engine rotation speed indicator (22, 122) includes an indicating portion (22a, 122a) indicating a current rotation speed of the engine (9), the indicating portion (22a, 122a) configured to move at least in a direction in which the multiple types of warning icons (36, 37, 38, 39) are arranged.

5. A saddle type vehicle (1) according to any one of claims 2 to 4, **characterized in that** the display device (16, 216, 316) is configured to display at least one of the multiple types of warning icons (36, 37, 38, 39) so as to be adjacent to the engine rotation speed indicator (22, 122).

6. A saddle type vehicle (1) according to any one of claims 2 to 5, **characterized in that** the display device (16, 216, 316) is configured to display at least one of the multiple types of warning icons (36, 37, 38, 39) and an information icon (30, 31, 32, 33, 34, 35) indicating information other than warning, between the front end portion of the screen (16a) and the engine rotation speed indicator (22, 122) indicating the rotation speed of the engine (9) so that the at least one of the warning icons (36, 37, 38, 39) is adjacent to the information icon (30, 31, 32, 33, 34, 35).

7. A saddle type vehicle (1) according to any one of claims 2 to 6, **characterized in that** the display device (16, 216, 316) is configured to display at least one (36) of the multiple types of warning icons (36, 37, 38, 39) between the front end portion of the screen (16a) and the engine rotation speed indicator (22, 122) indicating the rotation speed of the engine (9) and in a display area of an information icon (34) indicating information other than warning, without displaying the information icon (34) in its display area.

8. A saddle type vehicle (1) according to any one of claims 1 to 7, **characterized in that** the display device (16, 216) is configured to display the at least one warning icon (36, 37, 38, 39) forward of grips (5c, 5d) of the handlebar unit (5, 205) with respect to a vehicle forward/rearward direction.

9. A saddle type vehicle (1) according to any one of claims 1 to 7, **characterized in that** the display device (316) is configured to display the at least one warning icon (36, 37, 38, 39) between front end portions of the grips of the handlebar unit (5) and the seat (11) with respect to the vehicle forward/rearward direction.

10. A saddle type vehicle (1) according to any one of claims 1 to 9, **characterized in that** the display device is configured to indicate a change in vehicle speed by changing a number displayed on the screen (16a); and
each of the at least one warning icon (36, 37, 38, 39) is smaller than one digit of the number indicating the vehicle speed.

## Patentansprüche

1. Ein Sattel-Typ-Fahrzeug (1), das umfasst:
einen Fahrzeug-Körper-Rahmen (4);
einen Motor (9), der an den Fahrzeug-Körper-Rahmen (4) montiert ist, und zumindest ein Kurbelgehäuse (9a) beinhaltet;
einen Sitz (11), der höher als das Kurbelgehäuse (9a) des Motors (9) angeordnet ist;
eine Lenkstangeneinheit (5, 205), die vor dem Sitz (11) und höher als das Kurbelgehäuse (9a) des Motors (9) angeordnet ist; und
eine Anzeigevorrichtung (16, 216, 316), die vor dem Sitz (11) und höher als das Kurbelgehäuse (9a) des Motors (9) angeordnet ist, die Anzeigevorrichtung (16, 216, 316) beinhaltet einen Schirm (16a), der konfiguriert ist, um eine Dreh-Geschwindigkeit des Motors (9) anzuzeigen, und hat einen vorderen Endabschnitt, und einen hinteren Endabschnitt, der als der vordere Endabschnitt positioniert ist,
wobei die Anzeigevorrichtung (16, 216, 316) konfiguriert ist, um zumindest ein Warn-Bildzeichen (36, 37, 38, 39) anzuzeigen, das eine Warnung anzeigt, **dadurch gekennzeichnet, dass**
der Schirm (16a) der Anzeigevorrichtung (16) eine Punkt-Matrix-Aanzeige ist, und die Anzeigevorrichtung (16, 216, 316) ist konfiguriert, um das Warn-Bildzeichen (36, 37, 38, 39) auf dem Schirm (16a) zwischen dem vorderen Endabschnitt des Schirms (16a) und einem Motor-Dreh-Geschwindigkeits-Anzeiger (22, 122), welcher die Dreh-Geschwindigkeit des Motors (9) anzeigt, anzuzeigen.

2. Ein Sattel-Typ-Fahrzeug (1) gemäß Anspruch 1, **dadurch gekennzeichnet, dass** das zumindest eine Warn-Bildzeichen (36, 37, 38, 39) Mehrfach-Typen von Warn-Bildzeichen (36, 37, 38, 39) beinhaltet; und
die Anzeigevorrichtung (16, 216, 316) ist konfiguriert, um die Mehrfach-Typen von Warn-Bildzeichen (36, 37, 38, 39) in einer Anordnung anzuzeigen, so dass die Warn-Bildzeichen (36, 37, 38, 39) benachbart zueinander sind.

3. Ein Sattel-Typ-Fahrzeug (1) gemäß Anspruch 2, **dadurch gekennzeichnet, dass** die Anzeigevorrichtung (16, 216, 316) konfiguriert ist, um die Mehrfach-Typen von Warn-Bildzeichen (36, 37, 38, 39) in einer Anordnung zumindest in einer Fahrzeug-Breitenrichtung anzuzeigen.

4. Ein Sattel-Typ-Fahrzeug (1) gemäß Anspruch 3, **dadurch gekennzeichnet, dass** der Motor-Dreh-Geschwindigkeits-Anzeiger (22, 122) einen Anzeigeabschnitt (22a, 122a) beinhaltet, der eine momentane Dreh-Geschwindigkeit des Motors (9) anzeigt, der Anzeigeabschnitt (22a, 122a) ist konfiguriert sich zumindest in eine Richtung zu bewegen, in welcher die Mehrfach-Typen von Warn-Bildzeichen (36, 37, 38, 39) angeordnet sind.

5. Ein Sattel-Typ-Fahrzeug (1) gemäß irgendeinem der Ansprüche 2 bis 4, **dadurch gekennzeichnet, dass** die Anzeigevorrichtung (16, 216, 316) konfiguriert ist, um zumindest eines der Mehrfach-Typen von Warn-Bildzeichen (36, 37, 38, 39) anzuzeigen, sodass dieses benachbart zu dem Motor-Dreh-Geschwindigkeits-Anzeiger (22, 122) ist.

6. Ein Sattel-Typ-Fahrzeug (1) gemäß irgendeinem der Ansprüche 2 bis 5, **dadurch gekennzeichnet, dass** die Anzeigevorrichtung (16, 216, 316, 316) konfiguriert ist, um zumindest eines der Mehrfach-Typen von Warn-Bildzeichen (36, 37, 38, 39) und ein Informations-Bildzeichen (30, 31, 32, 33, 34) anzuzeigen, welches Informationen anzeigt, anders als eine Warnung zwischen dem vorderen Endabschnitt des Schirms 16a und dem Motor-Dreh-Geschwindigkeits-Anzeiger (22, 122), welcher die Dreh-Geschwindigkeit des Motors (9) anzeigt, sodass zumindest eines der Warn-Bildzeichen (36, 37, 38, 39) benachbart zu dem Informations-Bildzeichen (30, 31, 32, 33, 34, 35) ist.

7. Ein Sattel-Typ-Fahrzeug (1) gemäß irgendeinem der Ansprüche 2 bis 6, **dadurch gekennzeichnet, dass** die Anzeigevorrichtung (16, 216, 316) konfiguriert ist, um zumindest eines (36) der Mehrfach-Typen von Warn-Bildzeichen (36, 37, 38, 39) zwischen dem vorderen Endabschnitt des Schirms (16a) und dem Motor-Dreh-Geschwindigkeits-Anzeiger (22, 122), welcher die Dreh-Geschwindigkeit des Motors (9) anzeigt, in einem Anzeigebereich von einem Informations-Bildzeichen (34), welches Informationen anders als eine Warnung anzeigt, anzuzeigen, ohne dass Informations-Bildzeichen (34) in dessen Anzeigebereich anzuzeigen.

8. Ein Sattel-Typ-Fahrzeug (1) gemäß irgendeinem der Ansprüche 1 bis 7, **dadurch gekennzeichnet, dass** die Anzeigevorrichtung (16, 216) konfiguriert ist, um zumindest ein Warn-Bildzeichen (36, 37, 38, 39) vor den Griffen (5c, 5d) der Lenkstangeneinheit (5, 205) mit Bezug auf eine Fahrzeug-Vorder-Rück-Richtung anzuzeigen.

9. Ein Sattel-Typ-Fahrzeug (1) gemäß irgendeinem der Ansprüche 1 bis 7, **dadurch gekennzeichnet, dass** die Anzeigevorrichtung (316) konfiguriert ist, um zumindest ein Warn-Bildzeichen (36, 37, 38, 39) zwischen vorderen Endabschnitten der Griffe der Lenkstangeneinheit (5) und dem Sitz (11) mit Bezug auf die Fahrzeug-Vorder-Rück-Richtung anzuzeigen.

10. Ein Sattel-Typ-Fahrzeug (1) gemäß irgendeinem der Ansprüche 1 bis 9, **dadurch gekennzeichnet, dass** die Anzeigevorrichtung konfiguriert ist, um einen Wechsel in Fahrzeug-Geschwindigkeit durch Wechseln einer Nummer, angezeigt auf dem Schirm (16a), anzuzeigen; und jedes von dem zumindest einem Warn-Bildzeichen (36, 37, 38, 39) ist kleiner als eine Ziffer der Nummer, welche die Fahrzeug-Geschwindigkeit anzeigt.

## Revendications

1. Véhicule de type à selle (1) comprenant :
un châssis de véhicule (4) ;
un moteur (9) monté sur le cadre de véhicule (4) et incluant au moins un carter (9a) ;
un siège (11) situé plus haut que le carter (9a) du moteur (9) ;
une unité guidon (5, 205) localisée en avant du siège (11) et plus haut que le carter (9a) du moteur (9) ; et
un dispositif d'affichage (16, 216, 316) situé en avant du siège (11) et plus haut que le carter (9a) du moteur (9), le dispositif d'affichage (16, 216, 316) inclut un écran (16a) configuré pour afficher la vitesse de rotation du moteur (9) et comportant une partie d'extrémité avant et une partie d'extrémité arrière positionnée plus bas que la partie d'extrémité avant, où le dispositif d'affichage (16, 216, 316) est configuré pour afficher au moins une icône d'avertissement (36, 37, 38, 39) indiquant un avertissement, **caractérisé en ce que**
l'écran (16a) du dispositif d'affichage (16, 216, 316) est un afficheur à matrice de points, et
le dispositif d'affichage (16, 216, 316) est configuré pour afficher l'icône d'avertissement (36, 37, 38, 39) sur l'écran (16a) entre la partie d'extrémité avant de l'écran (16a) et un indicateur de vitesse de rotation du moteur (22, 122) indiquant la vitesse de rotation du moteur (9).

2. Véhicule de type à selle (1) selon la revendication 1, **caractérisé en ce que** l'au moins une icône d'avertissement (36, 37, 38, 39) inclut divers types d'icônes d'avertissement (36, 37, 38, 39) ;
et
le dispositif d'affichage (16, 216, 316) est configuré pour afficher les divers types d'icônes d'avertissement (36, 37, 38, 39) dans un agencement tel que les icônes d'avertissement (36, 37, 38, 39) sont adjacentes les unes aux autres.

3. Véhicule de type à selle (1) selon la revendication 2, **caractérisé en ce que** le dispositif d'affichage (16, 216, 316) est configuré pour afficher les divers types d'icônes d'avertissement (36, 37, 38, 39) dans un agencement orienté au moins dans la direction de la largeur du véhicule.

4. Véhicule de type à selle (1) selon la revendication 3, **caractérisé en ce que** l'indicateur de vitesse de rotation du moteur (22, 122) inclut une partie indicative (22a, 122a) indiquant une vitesse de rotation actuelle du moteur (9), la partie indicative (22a, 122a) étant configurée pour se déplacer au moins dans une direction dans laquelle les divers types d'icônes d'avertissement (36, 37, 38, 39) sont agencées.

5. Véhicule de type à selle (1) selon l'une quelconque des revendications 2 à 4, **caractérisé en ce que** le dispositif d'affichage (16, 216, 316) est configuré pour afficher au moins une des divers types icônes d'avertissement (36, 37, 38, 39) de manière à ce qu'elle soit adjacente à l'indicateur de vitesse de rotation du moteur (22, 122).

6. Véhicule de type à selle (1) selon l'une quelconque des revendications 2 à 5, **caractérisé en ce que** le dispositif d'affichage (16, 216, 316) est configuré pour afficher au moins un des divers types d'icônes d'avertissement (36, 37, 38, 39) et une icône d'information (30, 31, 32, 33, 34, 35) indiquant des informations différentes des avertissements, entre la partie d'extrémité avant de l'écran (16a) et l'indicateur de vitesse de rotation du moteur (22, 122) indiquant la vitesse de rotation du moteur (9) de manière à ce que l'au moins une des icônes d'avertissement (36, 37, 38, 39) soit adjacente à l'icône d'information (30, 31, 32, 33, 34, 35).

7. Véhicule de type à selle (1) selon l'une quelconque des revendications 2 à 6, **caractérisé en ce que** le dispositif d'affichage (16, 216, 316) est configuré pour afficher au moins un (36) des divers types d'icônes d'avertissement (36, 37, 38, 39) entre la partie d'extrémité avant de l'écran (16a) et l'indicateur de vitesse de rotation du moteur (22, 122) indiquant la vitesse de rotation du moteur (9) et dans une zone d'affichage d'une icône d'information (34) indiquant des informations différentes des avertissements, sans afficher l'icône d'information (34) dans sa zone d'affichage.

8. Véhicule de type à selle (1) selon l'une quelconque des revendications 1 à 7, **caractérisé en ce que** le dispositif d'affichage (16, 216) est configuré pour afficher l'au moins une icône d'avertissement (36, 37, 38, 39) en avant des poignées (5c, 5d) de l'unité guidon (5, 205) par rapport à la direction avant/arrière du véhicule.

9. Véhicule de type à selle (1) selon l'une quelconque des revendications 1 à 7, **caractérisé en ce que** le dispositif d'affichage (316) est configuré pour afficher l'au moins une icône d'avertissement (36, 37, 38, 39) entre les parties d'extrémité avant des poignées de l'unité guidon (5) et le siège (11) par rapport à la direction avant/arrière du véhicule.

10. Véhicule de type à selle (1) selon l'une quelconque des revendications 1 à 9, **caractérisé en ce que** le dispositif d'affichage est configuré pour indiquer un changement dans la vitesse du véhicule en changeant un nombre affiché sur l'écran (16a) ; et
chacune des au moins une icônes d'avertissement (36, 37, 38, 39) est plus petite qu'un chiffre du nombre indiquant la vitesse du véhicule.
